**Europäisches Patentamt**

**European Patent Office**

**Office européen des brevets**

(11) Veröffentlichungsnummer: **0 160 271**
**B1**

(12) **EUROPÄISCHE PATENTSCHRIFT**

(45) Veröffentlichungstag der Patentschrift: **16.01.91**

(21) Anmeldenummer: **85105032.8**

(22) Anmeldetag: **25.04.85**

(51) Int. Cl.⁵: **G 01 B 3/00**

(54) Verfahren und Vorrichtung zur Herstellung von Messbändern.

(30) Priorität: **30.04.84 DE 3416013**

(43) Veröffentlichungstag der Anmeldung:
**06.11.85 Patentblatt 85/45**

(45) Bekanntmachung des Hinweises auf die
Patenterteilung:
**16.01.91 Patentblatt 91/03**

(84) Benannte Vertragsstaaten:
**AT CH FR GB IT LI SE**

(56) Entgegenhaltungen:
**DE-A-2 402 449**
**GB-A-1 536 178**
**GB-A-2 126 169**

**IRON AND STEEL ENGINEER, Band 48, Nr. 5,
Mai 1971, Seiten 79-82; R. GARTSIDE: "Printing
on coated and uncoated steel strip"
Prospekt "EVERMARK
LASERKENNZEICHNUNG" (Laser Optronic)**

(73) Patentinhaber: **Meywald, Volker, Dipl.-Ing.
Finkenweg 19
D-3548 Arolsen (DE)**

(72) Erfinder: **Meywald, Volker, Dipl.-Ing.
Finkenweg 19
D-3548 Arolsen (DE)**

(74) Vertreter: **Patentanwälte Dipl.-Ing. Rudolf
Bibrach Dipl.-Ing. Elmar Rehberg
Postfach 1453 Pütterweg 6
D-3400 Göttingen (DE)**

**Beschreibung**

Die Erfindung bezieht sich auf ein Verfahren und eine Vorrichtung zur Herstellung von Meßbändern.

Aus dem Prospekt der Firma Laser Optronic "Evermark Laserkennzeichnung", vorgeführt auf der Productronica 1983 in München, ist ein Verfahren zur Herstellung von Längenmeßgeräten bekannt, bei dem das Längenmeßgerät, z.B. in Form einer Schieblehre bzw. eines Meßschiebers, stillstehend jeweils taktweise in immer gleicher Weise berührungslos mit einem Druckwerk bedruckt wird. Dabei werden die auszudruckenden Teilungsstriche, Ziffern- und Zeichenfolgen aus einem Speicher abgerufen. Zum Drucken wird ein aufgeweiteter Laserstrahl benutzt, der bei stillstehendem Längenmeßgerät über ein Schreibfeld bestimmter Größe abgelenkt werden kann.

Jedoch bei der Herstellung von Meßbändern in den verschiedensten Ausführungen wird beispielsweise ein Rohband aus Stahl im Abwälzverfahren, also unter direkter Berührung mit der Meßeinteilung, bedruckt, d.h. mit den Maßstrichen und den Maßangaben. Dabei werden Druckwerke eingesetzt, die im einzelnen sehr kompliziert aufgebaut und daher aufwendig in der Herstellung sind. Diese Druckwerke müssen so ausgebildet sein, daß einmal von einem Millimeterstrichbild am Anfang des Meßbands zwischen 0 und 10 auf ein Zentimeterstrichbild gegangen werden kann. Weiterhin müssen die Zentimeterangaben und auch die Meterangaben gedruckt werden. Gleiches gilt in analoger Weise für andere Teilungen, beispielsweise ein Meßband mit Fußteilung oder auch dann, wenn für verschiedene Teilungsbilder unterschiedliche Druckstöcke eingesetzt werden müssen. Das Herstellungsverfahren für diese Druckstöcke, nämlich die Filme, Klischees, Klischeeträger sowie die Montage derselben, nimmt nicht unerhebliche Zeit in Anspruch. Trotzdem ist es nahezu ausgeschlossen und unvertretbar aufwendig, mit den herkömmlichen maschinenbaulichen Möglichkeiten eine Druckmaschine zur Herstellung von Meßbändern zu entwickeln, die universell alle in Frage kommenden Meßbandtypen herstellen kann. Hierbei ist zu bedenken, daß auch unterschiedlich breite Meßbänder hergestellt werden, wodurch jeweils verschiedene Druckwerke erforderlich werden. Weiterhin müssen Meßbänder in variablen Längen hergestellt werden, so daß ein Zurückgehen auf den Anfang des Meßbands bei unterschiedlichen Längen erfolgen muß.

Es ist auch bekannt, bei der Herstellung von Meßbändern Druckstöcke bzw. Druckschablonen einzusetzen, die die Länge des zu bedruckenden Rohbands aufweisen, so daß die Druckschablone bei der Herstellung eines Bands insgesamt einmal abgeformt bzw. abgedruckt wird. Abgesehen davon, daß derartige Druckschablonen ebenfalls aufwendig und teuer in der Herstellung sind, lassen diese jeweiligen Druckschablonen jeweils nur die Herstellung eines insoweit unveränderbaren Meßbands zu. Zur Änderung der Teilungsstriche, der Ziffern- und Zeichenfolgen ist es erforderlich, jeweils eine neue Druckschablone anzufertigen. Sogar für das Bedrucken lediglich unterschiedlich breiter Meßbändern sind die jeweiligen Druckschablonen erforderlich.

Andererseits läßt sich auf dem Markt laufend ein sich verstärkender Trend zur Entwicklung von Eigenmarken des Handels feststellen. Hier wird bei der Meßbandherstellung ein zusätzlicher Aufdruck oder auch eine eigene Schriftform für die Maßangaben gewünscht, so daß hier jedes Mal hohe Investitionen für derartige Druckstöcke anfallen.

Bei der Meßbandherstellung tritt oft auch das Problem auf, auf rauhe und/oder auf nicht ebene Oberflächen Teilungsstriche, Ziffern- und Zeichenfolgen aufzubringen.

Dies ist in der Regel gar nicht möglich, weil die Meßbandherstellung bisher eine ebene, zu bedruckende Fläche voraussetzt. So wird beispielsweise in einem Anwendungsfall, in welchem ein Lichtleitkabel mit kreisrundem Querschnitt an sich eine Meßeinteilung tragen sollte, ein ebenes bedrucktes Meßband mit dieser Lichtleitfaser vereint. Auch dieser Stand der Technik zeigt auf, daß sich in der Meßbandherstellung ein Vorurteil aufgebaut hat, gemäß welchem eine ebene zu bedruckende Fläche und ein körperliches Abformen des Druckbilds, also ein Drucken unter Berührung, als unabdingbar vorausgesetzt wird.

Die GB-A-1 536 178 zeigt ein Verfahren zur Herstellung von Markierungen auf strangförmigem Gut, insbesondere auf elektrischen Kabeln, deren Drahtseele mit einer Isolierung versehen ist. Es ist ein Druckwerk zum berührungslosen Bedrucken und eine Transporteinrichtung zum Fördern des vorbereiteten Rohkörpers vorgesehen, die durch eine Steuereinrichtung miteinander verbunden sind. Diese Steuereinrichtung steuert einerseits die Transporteinrichtung und andererseits das Druckwerk, und zwar derart, daß die Transportgeschwindigkeit des Rohkörpers mit der Arbeitsgeschwindigkeit des Druckwerks während des Bedruckungsvorgangs synchronisiert wird. Dabei können auf den Rohkörper Längenmarkierungen, Ziffern- und Zeichenfolgen berührungslos aufgebracht werden, wobei die Art, die Anzahl, die Höhe und der Abstand der Längenmarkierungen, der Ziffern- und Zeichenfolgen während des Bedruckungsvorgangs generiert werden. Da es beim Aufbringen solcher Markierungen auf die Vermittlung des Sinngehalts dieser Markierungen ankommt und der gegenseitige Abstand dieser Markierungen an sich keine Rolle spielt, wird durch eine solche Synchronisation eine für den Anwendungsfall ausreichende Genauigkeit erzielt.

Die GB-A-2 126 169 zeigt eine ähnliche Einrichtung zum Aufbringen von Markierungen auf schlauchförmige Gebilde, wobei das Druckwerk mit einer Transporteinrichtung versehen ist, wobei ein Antrieb vor und ein Antrieb hinter dem das Druckwerk eigentlich bildenden Schreibstift vorgesehen sind. Vermittels dieser beiden Antriebe wird der Schlauch in eine plattgequetschte Form überführt und es wird der Schlauch in x-Richtung und der Schreibstift in y-Richtung bewegt, um die Markierung aufzubringen. Auch dabei wird die Transportgeschwindigkeit der Antriebseinrichtungen mit der Arbeitsgeschwindigkeit des Druckwerks synchronisiert. Über eine Eingabeeinheit können die verschiedenen aufzubringenden Markierungen in die Steuereinrichtung eingespeist werden. Auch diese Synchronisierung erschöpft sich in der Steuerung. Eine Regelung erfolgt nicht.

Der Erfindung liegt die Aufgabe zugrunde, Meßbänder verschiedener Ausbildung wirtschaftlich mit hoher Maßhaltigkeit herstellen zu können. Die verschiedene Ausbildung bezieht sich sowohl auf den Bandstreifen selbst, also auf verschiedene Bandbreiten, Bandlängen, gekrümmte oder ebene Oberflächen, auf das Bedrucken verschiedener Materialien des Rohbands und auch hinsichtlich verschiedener Rauhigkeit der zu bedruckenden Oberfläche, als auch auf die Verschiedenartigkeit des Druckbilds hinsichtlich der Teilungsstriche, der Ziffern- und Zeichenfolgen usw.

Das erfindungsgemäße Verfahren kennzeichnet sich durch die im Anspruch 1 angegebenen Merkmale. Die Erfindung wendet an sich bekannte berührungslose Druckverfahren erstmalig bei der Herstellung von Meßbändern an und kehrt sich somit von dem bisher eingeschlagenen Stand der Technik völlig ab, gemäß welchem es bei der Herstellung von Meßbändern als erforderlich angesehen wurde, die Druckschablone körperlich vorrätig zu haben und als Gegenstück mit dem Rohband unter Berührung abzuformen. Der berührungslose Druckvorgang wird kontinuierlich durchgeführt, also ohne stillstehenden Vorschub. Der Druckvorgang wird mit sich wiederholenden oder wechselnden Maßteilungslängen durchgeführt, so daß von einem Rohband relativ großer Länge mehrere Meßbänder, die auch unterschiedlich im einzelnen ausgebildet sein können, kontinuierlich hergestellt werden. Weiterhin ist es noch erforderlich, die Transportgeschwindigkeit des Rohbands, also insbesondere die Geschwindigkeit, mit der das Rohband relativ an dem Druckwerk vorbeibewegt wird, mit der Arbeitsgeschwindigkeit des Druckwerks im Sinne einer Regelung zu synchronisieren und so abzustimmen, daß die Maßgenauigkeit erreicht wird. Wenn man sich erst einmal über das Vorurteil der relativ schwierigen Steuerung berührungsloser Druckwerke hinweggesetzt hat und derartige Druckwerke tatsächlich auch bei der Herstellung von Meßbändern einsetzt, stellt sich auch insofern ein unerwartetes Ergebnis ein, als die Herstellung von Meßbändern letztlich sehr kostengünstig möglich ist. Es ist nämlich praktisch nur noch eine einzige Herstellungsvorrichtung erforderlich, um die ganze palette der verschiedenen Meßbänder mit den abweichenden Teilungsstrichen, Ziffern und Zeichenfolgen herstellen zu können.

Das berührungslose Drucken kann durch Aufspritzen von Druckfarbe auf das Rohband erfolgen, wobei die Teilungsstriche, die Ziffern- und Zeichenfolgen aus mehreren Punkten zusammengesetzt werden. Dabei können matrizenförmig angeordnet eine größere Anzahl von Düsen eingesetzt werden, die beispielsweise in zwei Reihen etwas versetzt nebeneinander angeordnet sind. Jede dieser Düsen wird von der entsprechenden Steuerelektronik separat mit einem piezo-elektrischen Pulsgerät angesteuert. Eine weitere Möglichkeit besteht durch Anwendung des sog. Tintenstrahldruckers, der mit einem kontinuierlichen Tintenstrahl arbeitet, der so pulsiert, daß er zu einem genau definierten Zeitpunkt in einzelne Tröpfchen zerlegt wird. Kurz vor dem Abriß dieser Tröpfchen werden sie mit einer elektrischen Ladung versehen, wodurch sie zwischen zwei Kondensatorplatten abgelenkt werden. Nach dem prinzip des Kathodenstrahls bestimmt die Ladung des Tröpfchens im Zusammenhang mit der angelegten Spannung an den Kondensatorplatten die Flugrichtung und damit das Druckbild. Nicht benötigte Tröpfchen können zu einem Fangröhrchen hin abgelenkt werden.

Das berührungslose Drucken kann auch durch Elektro-Erosion erfolgen. Dabei muß das Rohband jedoch speziell präpariert werden. Diese Präparation ist jedoch bei der üblichen Elektro-Erosion bekannt. Es besteht weiterhin die Möglichkeit, das berührungslose Drucken unter Verwendung von energiereichem Laserlicht durchzuführen. Auch dies läßt sich mit Vorteil auf die Herstellung von Meßbändern anwenden.

Das Rohband kann mit konstanter Geschwindigkeit während des berührungslosen Bedruckungsvorgangs geführt und zur Erreichung der Synchronisation der Bedruckungsvorgang zeitlich geregelt werden. Es ist aber auch umgekehrt möglich, daß der berührungslose Bedruckungsvorgang zeitlich konstant durchgeführt wird und zur Erreichung der Synchronisation die Geschwindigkeit, mit der das Rohband während des Bedruckungsvorgfangs geführt wird, geregelt wird. Auch eine kombinierte Verfahrensweise ist denkbar. Unter Anwendung dieser Verfahrensschritte werden zugleich mechanische und thermische Einflüsse, die variieren können, in ihren negativen Folgen auf das Druckergebnis ausgeschaltet.

Die Vorrichtung zur Herstellung von Meßbändern kennzeichnet sich durch die im Anspruch 7 angegebenen Merkmale.

Das Druckwerk, welches an sich ganz verschieden ausgebildet sein kann, sollte entsprechend der Art, der Anzahl, der Höhe und des Abstands der Teilungsstriche und der Ziffern- und Zeichenfolgen programmierbar ausgebildet sein, damit die Generierung der erforderlichen Zeichen und Ziffern jeweils entsprechend dem gewünschten Druckergebnis durchgeführt werden kann. Es können auch mehrere Druckwerke an der Führungsstrecke des Rohbands versetzt zueinander angeordnet sein, um die angestrebte große Variabilität des Druckbilds zu erzielen. Damit kann ein zusammenhängendes Zeichen berührungslos gedruckt werden.

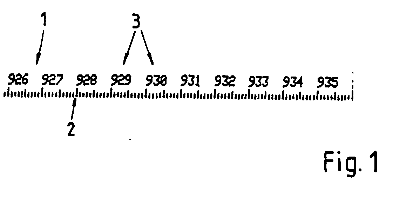

Die Erfindung wird in Figur 1 anhand einer Darstellung eines Ausschnitts aus einem Meßband weiter erläutert, welches mit berührungslosem Drucken durch Aufspritzen von Druckfarbe hergestellt wurde. Das Rohband 1 besteht aus einem üblichen Metallband, kann aber auch aus einem Kunststoff- oder Textilband bestehen, welches eine rauhe oder auch eine glatte Oberfläche aufweist. An der einen Bandkante beginnend sind die Teilungsstriche 2 aus einzelnen Punkten zusammengesetzt aufgetragen. Auch die Ziffern 3 sind aus Punkten zusammengesetzt, was insbesondere an der Wiedergabe der Zahl 7 deutlich auch ohne Lupe erkennbar ist. Selbstverständlich stellt das in Figur 1 wiedergegebene Meßband nur eine der vielen zahlreichen Variationsmöglichkeiten dar. So ist es ohne weiteres möglich, das Druckbild z.B. bei der Herstellung breiterer Meßbänder zu spreizen, die Schriftart der Ziffern- und Zeichenfolgen anders zu wählen oder auch zusätzliche Informationen, beispielsweise den Hersteller des Meßbands oder eine Händlermarke o.dgl. im jeweils gewünschten Abstand aufzudrucken. Es können hintereinander kontinuierlich auch Meßbänder verschiedener Länge, beispielsweise 50-m-Bänder und 30-m-Bänder, hergestellt werden. Durch die Generierung der Zeichen und Ziffern ist hier völlige Freiheit gegeben.

Auch die Ebenflächigkeit und die Glattheit oder die Rauhheit des zu bedruckenden Meßbanduntergrunds ist ohne Bedeutung. Dies ist ein wesentlicher Vorteil des berührungslosen Druckverfahrens.

## Patentansprüche

1. Verfahren zur Herstellung von Meßbändern, bei dem ein vorbereitetes Rohband (1) mit sich wiederholenden oder wechselnden Maßteilungslängen mit Teilungsstrichen und mit Ziffern- und Zeichenfolgen berührungslos bei nichtstillstehendem Vorschub mittels eines Druckwerks bedruckt wird, wobei die Art, die Anzahl, die Höhe und der Abstand der Teilungsstriche, der Ziffern- und Zeichenfolgen während des Bedruckungsvorgangs generiert werden, und die Transportgeschwindigkeit des Rohbands (1) mit der Arbeitsgeschwindigkeit des Druckwerks synchronisiert wird, indem die Transportgeschwindigkeit des Rohbands (1) und/oder die Arbeitsgeschwindigkeit des Druckwerks geregelt wird.

2. Verfahren nach Anspruch 1, dadurch gekennzeichnet, daß das berührungslose Drucken durch Aufspritzen von Druckfarbe auf das Rohband (1) erfolgt, wobei die Teilungsstriche (2), die Ziffern- und Zeichenfolgen (3) aus mehreren Punkten zusammengesetzt sind.

3. Verfahren nach Anspruch 1, dadurch gekennzeichnet, daß das berührungslose Drucken durch Elektro-Erosion erfolgt.

4. Verfahren nach Anspruch 1, dadurch gekennzeichnet, daß das berührungslose Drucken unter Verwendung von energiereichem Laserlicht erfolgt.

5. Verfahren nach Anspruch 1, dadurch gekennzeichnet, daß das Rohband (1) mit konstanter Geschwindigkeit während des berührungslosen Bedruckungsvorgangs geführt und zur Erreichung der Synchronisation der Bedruckungsvorgang zeitlich geregelt ist.

6. Verfahren nach Anspruch 1, dadurch gekennzeichnet, daß der berührungslose Bedruckungsvorgang zeitlich konstant durchgeführt wird und zur Erreichung der Synchronisation die Geschwindigkeit, mit der das Rohband (1) während des Bedruckungsvorgangs geführt wird, geregelt ist.

7. Vorrichtung zur Herstellung von Meßbändern, die ein berührungslos arbeitendes Druckwerk, eine Einrichtung zum Generieren der Teilungsstriche und der Ziffern- und Zeichenfolgen, eine Einrichtung zum Transport des Rohbands mit nicht-stillstehendem Vorschub relativ zum Druckwerk und eine Einrichtung zum Synchronisieren der Arbeitsgeschwindigkeit des Druckwerks mit der Einrichtung zum Transport des Rohbands (1), und zwar im Sinne einer Regelung während des Bedruckungsvorgangs aufweist.

8. Vorrichtung nach Anspruch 7, dadurch gekennzeichnet, daß mehrere Druckwerke an der Führungsstrecke des Rohbands (1) versetzt zueinander angeordnet sind.

## Revendications

1. Procédé de fabrication de rubans de mesure, dans lequel, au moyen d'une unité d'impression, on imprime sans contact sur un ruban brut (1) préalablement préparé, des traits de division et des suites de chiffres et de signes avec des espacements répétitifs ou variables, dans lequel le type, le nombre, la hauteur et l'espacement des traits de division et des suites de chiffres et de signes sont générés pendant le processus d'impression, et dans lequel la vitesse de transport du ruban brut (1) est synchronisée avec la vitesse de travail de l'unité d'impression et/ou la vitesse de travail de l'unité d'impression est réglée.

2. Procédé selon la revendication 1, caractérisé en ce que l'impression sans contact a lieu par pulvérisation d'encre sur le ruban brut (1), les traits de division (2) et les suites de chiffres et de signes (3) étant composés de plusieurs points.

3. Procédé selon la revendication 1, caractérisé en ce que l'impression sans contact est réalisée par électro-érosion.

4. Procédé selon la revendication 1, caractérisé en ce que l'impression sans contact a lieu en utilisant un faisceau laser à forte énergie.

5. Procédé selon la revendication 1, caractérisé en ce que le ruban brut (1) est entraîné à vitesse constante pendant le processus d'impression sans contact et que ladite vitesse est réglée temporellement pour obtenir sa synchronisation avec le processus d'impression.

6. Procédé selon la revendication 1, caractérisé en ce que le processus d'impression sans contact est conduit temporellement à vitesse constante, et que la vitesse d'entraînement du ruban brut (1) pendant le processus d'impression est réglée pour obtenir sa synchronisation avec ledit processus d'impression.

7. Dispositif de fabrication de rubans de mesure, présentant une unité d'impression fonctionnant sans contact, un dispositif de génération des traits de division et des suites de chiffres et de signes, un dispositif de transport du ruban brut avec avance sans temps d'arrêt par rapport à l'unité d'impression, et un dispositif de synchronisation de la vitesse de travail de l'unité d'impression avec le dispositif de transport du ruban brut (1), et ceci dans le sens d'une régulation pendant le processus d'impression.

8. Dispositif selon la revendication 7, caractérisé en ce que plusieurs unités d'impression sont disposées décalées entre elles le long du trajet de guidage du ruban brut (1).

**Claims**

1. Method of producing measuring tapes, in which a prepared raw tape (1) is printed with repeating or alternating graduation lengths, with graduation lines and with sequences of numerals and characters in a contactless fashion in conjunction with a non-stationary feed by means of a printing element, the type, the number, the level and the spacing of the graduation lines and of the sequences of numerals and characters being generated during the printing process, and the rate of transport of the raw tape (1) being synchronized with the operating rate of the printing element in that the rate of transport of the raw tape (1) and/or the operating rate of the printing element is controlled.

2. Method according to Claim 1, characterized in that contactless printing is done by spraying print colour onto the raw tape (1), the graduation lines (2) and the sequences of numerals and characters (3) being composed of a plurality of points.

3. Method according to Claim 1, characterized in that contactless printing is done by electro-erosion.

4. Method according to Claim 1, characterized in that contactless printing is done using high-energy laser light.

5. Method according to Claim 1, characterized in that the raw tape (1) is guided at a constant rate during the contactless printing process, and is temporally controlled in order to achieve synchronization of the printing process.

6. Method according to Claim 1, characterized in that the contactless printing process is carried out in a temporally constant fashion, and the rate at which the raw tape (1) is guided during the printing process is controlled in order to achieve synchronization.

7. Device for producing measuring tapes, which has a printing element operating in a contactless fashion, a device for generating the graduation lines and the sequences of numerals and characters, a device for transporting the raw tape with a non-stationary feed relative to the printing element and a device for synchronizing the operating rate of the printing element with the device for transporting the raw tape (1), to be precise in order to provide control during the printing process.

8. Device according to Claim 7, characterized in that a plurality of printing elements are arranged offset with respect to one another on the guide section of the raw tape (1).

Fig. 1